# EUROPÄISCHE PATENTSCHRIFT

(11) **EP 2 463 968 B1**
(45) Veröffentlichungstag und Bekanntmachung des Hinweises auf die Patenterteilung: **07.03.2018**
(21) Anmeldenummer: 11192201.9
(22) Anmeldetag: 06.12.2011
(51) Int. Cl.: H01R 25/16, F21V 21/005

(54) **Verbindungselement für ein Lichtbandschienensystem bzw. ein Tragschienensystem für stabförmige Leuchtmittel**
Connection element for rail lighting system
Elément de connexion pour système de rail d'éclairage

(30) Priorität: 07.12.2010 DE 202010013079 U
(43) Veröffentlichungstag der Anmeldung: 13.06.2012
(73) Patentinhaber: Lunux GmbH, 30880 Laatzen (DE)
(72) Erfinder: Schumacher, Peter, 59227 Ahlen (DE)
(74) Vertreter: Flötotto, Hubert

(56) Entgegenhaltungen:
- DE-U1-202010 006 329
- US-A1- 2003 095 829
- US-A1- 2010 232 873

## Beschreibung

### Technisches Umfeld

Die Erfindung betrifft ein Verbindungselement für ein Lichtbandschienensystem bzw. ein Tragschienensystem für Leuchten, umfassend vorzugsweise U-förmige Schienenprofile, die auf Stoß mittels eines ebenfalls U-förmig ausgebildeten Verbindungselementes verbindbar sind, wobei jeweils die Endbereiche der zu verbindenden Schienenprofile auf das unter einem Toleranzmaß gefertigte Verbindungselement schiebbar bzw. steckbar ausgebildet sind, und die Endbereiche an dem Verbindungselement festlegbar sind.

### Stand der Technik

Lichtbandschienensysteme bzw. Tragschienensysteme beispielsweise für stabförmige Leuchtmittel finden ihren Haupteinsatz in Fertigungshallen oder Verkaufshallen, wobei diese in einem Strang unter der Hallendecke angebracht werden. Dabei bilden die Basiseinheiten Schienenprofile, die aus profilierten Stahlschienen bzw. extrudierten Aluminiumprofilen hergestellt sind. Diese werden üblicherweise mit so genannten Verbindungselementen, die mit einem geringeren Toleranzmaß eine entsprechende Profilierung wie die Schienenprofile aufweisen, zu einem Lichtband verbunden. Dabei werden mindestens zwei konturidentische Profile miteinander verbunden und mit Spannvorrichtungen in Form von Schrauben zusammengefügt.

Diese Art der festen Verbindung macht den Einsatz von Hilfsmitteln insbesondere Werkzeugen erforderlich und ist vor dem Hintergrund der kostenoptimierten Montagetechnik von Nachteilen. Eine weitere bekannte Verbindungstechnik stellt die mechanische Verbindung mit Hilfe eines ausgestanzten Federelementes an dem Verbindungselement dar, welches bei der Montage, also bei Aufschieben des Schienenprofils deformiert wird. Diese Art der Verbindung bietet zwar den Vorteil der werkzeuglosen Montage, hat jedoch den Nachteil, dass aufgrund der allgemeinen üblichen Toleranzen der Schienenprofile und der Verbindungselemente bei dieser Technik die Montage und die Haltekraft erheblich von der Toleranz der kommunizierenden Komponenten abhängig ist. Aus Gründen der sicheren Montage fällt die Auslegung der Komponenten dabei häufig zu Lasten der Leitfähigkeit der montierten Komponenten aus. Das Dokument US2003/095829 A1 offenbart ein Verbindungselement gemäß dem Präambel vom Anspruch 1.

### Aufgabe

Der Erfindung stellt sich somit das Problem ein Verbindungselement für ein Lichtbandschienensystem bzw. ein Tragschienensystem für Leuchten bereit zu stellen, welches eine schnelle und werkzeuglose Montage sowie eine hohe Haltekraft mit einer geforderten Leitfähigkeit zwischen den zu verbindenden Schienenprofilen bereit stellt, wobei das Toleranzfeld der korrespondierenden Komponenten durch die Verbindungstechnik vor dem Hintergrund der Kostenreduzierung vergrößert werden soll.

### Lösung

Erfindungsgemäß wird das Problem mit den Merkmalen des Hauptanspruchs gelöst. Vorteilhafte Ausgestaltungen der Erfindung ergeben sich aus den Unteransprüchen.

Die mit der Erfindung erreichten Vorteile bestehen darin, dass das erfindungsgemäße Verbindungselement für derartige Schienenprofilsysteme eine manuelle, ohne Hilfsmittel zu bedienende werkzeuglose mechanische Verriegelung mit gleichzeitiger Erstellung einer elektrisch leitenden Verbindung zur Gewährleistung dessen Normen konformen Potentialausgleich bereit stellt. Durch die Erfindung wird gewährleistet, dass das Verbindungselement auch bei den üblicherweise vorherrschenden Toleranzverhältnissen mit einer geringen Kraft in die Schienenprofile eingesetzt werden kann und gleichzeitig eine ausreichende Haltekraft, die das Auseinandergleiten der montierten Schienen verhindert, sicher stellt.

Hierzu wird erfindungsgemäß vorgeschlagen, dass an dem Verbindungselement handbetätigbare Spannelemente angeordnet sind, die eine werkzeuglose Verspannung und Entspannung zwischen den jeweiligen Endbereichen des Schienenprofils und dem Verbindungselement bewirken, wobei im verspannten Zustand die elektrisch leitbare Verbindung zwischen den Schienenprofilen herstellbar ist. Dabei umfasst das Spannelement ein Federelement, dessen Spannkraft entgegen der Aufschieberichtung des Schienenprofils wirkt. Das Federelement als solches ist hierbei aus einer Federstahlzunge gebildet. Diese ist in einer an dem Verbindungselement vorgesehenen Durchbruchsöffnung angeordnet. Die Federstahlzunge ist an der Durchbruchsöffnung schwenkbar gelagert, wobei die Federstahlzunge in ihrer Erstreckung kleiner bemessen ist, als die Erstreckung der Durchbruchsöffnung. Somit wird gewährleistet, dass ein freies Verschwenken der Federstahlzunge in dem Öffnungsbereich der Durchbruchsöffnung gegeben ist.

In Weiterbildung der Erfindung wirkt hierbei die Federstahlzunge mit einem an der Durchbruchsöffnung angeordneten Schieber zusammen, mittels der die Federstahlzunge verspannbar bzw. entspannbar gegenüber dem aufgeschobenen Schienenprofil ist. Der bewegbare Schieber in der Durchbruchsöffnung bewirkt somit den Verriegelungs- bzw. den Endriegelungsvorgang des Verbindungselementes zu den aufgeschobenen Schienenprofilen. Dabei ist die Federstahlzunge in Form einer gewölbten oder dachförmigen Formgebung gestaltet. Es versteht sich nun von selbst, dass, wenn beispielsweise der Schieber sich an der Lagerstelle der Federstahlzunge befindet, die gebogene bzw. dachgeformte Federstahlzunge dann durch die Durchtrittsöffnung ragt und somit keine Behinderung darstellt, wenn das Schienenprofil auf das Verbindungselement aufgeschoben wird.

In zweckmäßiger Ausgestaltung sind dabei am freien Ende der Federstahlzunge unter einem Winkel stehende Zacken angeordnet, die im verspannten Zustand der Federstahlzunge sich an der Innenwand des aufgeschobenen Schienenprofils verkrallen. Somit wird sicher gestellt, dass neben der Festlegung auch die elektrische Leitfähigkeit hergestellt wird, da insbesondere die Zacken in das Material der Schienenprofile eingreifen. In Weiterbildung der Erfindung besteht hierbei der Schieber aus einem plattenförmigen Element, an dessen Seitenkanten Nuten angeformt sind, die in die Längsseiten der Durchbruchsöffnung greifen. Die Nuten sind dabei an dem Element derart angeformt, das diese an der Oberseite mit ihren oberen Schenkeln über dem Niveau des plattenförmigen Elementes zur Bildung einer Führungsbahn für die aufliegende Federstahlzunge angeordnet sind. Es versteht sich nun von selbst, dass, wenn der Schieber nach vorne verschoben wird, in Richtung der Krallen bzw. der Zacken, dann die Federstahlzunge zwischen den an der Oberseite befindlichen Nuten geführt wird, so dass ein sicherer Eingriff an der Innenwandung des Schienenprofils erreicht wird.

In Weiterbildung der Erfindung ist unterhalb des plattenförmigen Elementes ein Griffelement zur Betätigung des Schiebers angeformt. Somit wird erreicht, dass auf einfache Weise durch Betätigung des Griffelementes mit der Hand hier die Entspann- bzw. die Verspannwirkung herbei geführt werden kann, wobei insbesondere an der Oberseite des Schiebers die sichere Führung der Federstahlzunge gewährleistet wird. In Weiterbildung der Erfindung sind in den Längsseiten der Durchbruchsöffnungen ausgestanzte Bereiche zum Einsetzen des Schiebers vorgesehen. Somit lässt sich in einfacher Weise der geformte einstückige Schieber leicht in die Führungsbahnen der Durchbruchsöffnung einsetzen.

Nach einer vorteilhaften Ausgestaltung der Erfindung kann das Spannelement auch ein Drehelement umfassen, dessen Spannkraft entgegen der Verschieberichtung des Schienenprofils wirkt. Das Spannelement kann aber auch ein Klappelement umfassen, dessen Spannkraft entgegen der Schieberichtung des Schienenprofils wirkt. Dabei kann das Drehelement, aber auch das Klappelement, entsprechend mit einer Federstahlzunge zusammenwirken, um auf diese Weise die entsprechenden geschilderten Vorteile zu erreichen.

### Beschreibung der Zeichnungen

Ein Ausführungsbeispiel der Erfindung ist in den Zeichnungen rein schematisch dargestellt und wird nachfolgend näher beschrieben. Es zeigt:
- Figur 1: eine perspektivische Darstellung des Verbindungselementes in Teilansicht mit einem Schienenprofil in explosionsartiger Darstellung;
- Figur 2: zeigt ebenfalls eine Teilansicht des Verbindungselementes in isolierter Darstellung mit verspannter Federstahlzunge;
- Figur 3: eine Unteransicht in das Verbindungselement in Wirkverbindung mit einem Schienenprofil im entspannten Zustand;
- Figur 4: eine weitere Unteransicht gemäß der Figur 3 in das Verbindungselement in Wirkverbindung mit einem Schienenprofil im verspannten Zustand der Federstahlzunge; und
- Figur 5: eine Einzelansicht des Schiebers in der perspektivischen Darstellung.

### Ausführungsbeispiele

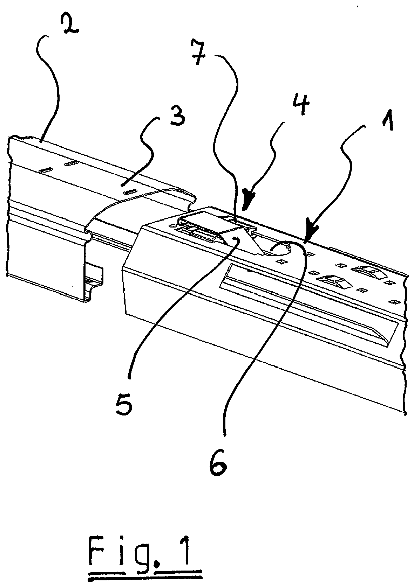

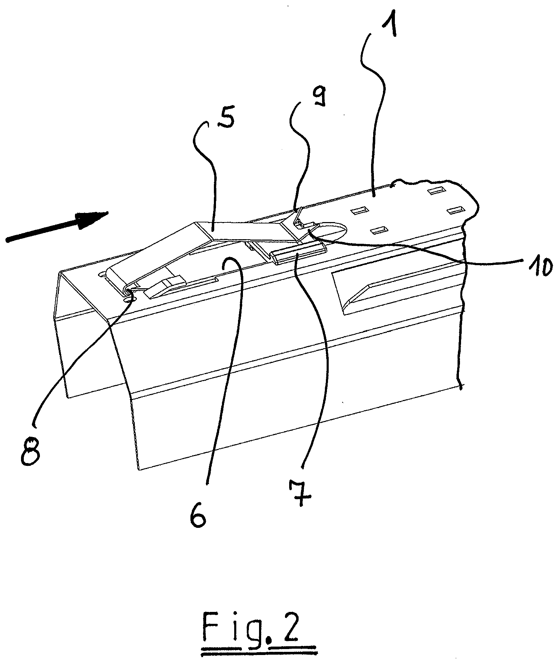

Die Figur 1 zeigt ein Verbindungselement 1 für ein Lichtbandschienensystem bzw. ein Tragschienensystem für stabförmige Leuchtmittel, wobei das Verbindungselement 1 hier nur in einem Teilbereich dargestellt ist. Das Verbindungselement 1 verbindet vorzugsweise U-förmig ausgebildete Schienenprofile 2, wie es in der explosionsartigen Darstellung der Figur 1 mit ihrem Endbereich dargestellt ist. Dabei werden die Schienenprofile 2 auf Stoß mittels des ebenfalls U-förmig ausgebildeten Verbindungselementes 1 verbunden. Es versteht sich von selbst, dass, wenn die beiden Endbereiche 2 von gegenüber liegenden Schienenprofilen 2 auf das Verbindungselement 1 geschoben werden, diese dann im Mittelbereich des Verbindungselementes 1 auf Stoß liegen. Dabei ist jeweils, wie dargestellt, der Endbereich 3 der zu verbindenden Schienenprofile 2, auf das unter einem Toleranzmaß gefertigte Verbindungselement 1 schiebbar bzw. steckbar ausgebildet. Um den aufgeschobenen Schienenprofilen 2 mit ihren Endbereichen 3 eine gewisse Haftung an dem Verbindungselement 1 zu geben, sind diese an dem Verbindungselement 1 festlegbar. Wie insbesondere aus der Zusammenschau der Figuren 1 und 2 ersichtlich wird, sind an dem Verbindungselement 1 handbetätigbare Spannelemente 4 angeordnet, die eine werkzeuglose Verspannung bzw. Entspannung zwischen dem jeweiligen Endbereich 3 des Schienenprofils 2 und dem Verbindungselement 1 bewirken. Dabei wird insbesondere im verspannten Zustand die elektrische Leitfähigkeit zwischen den festgelegten Schienenprofilen 2 über das Verbindungselement 1 hergestellt.

Wie aus der Figur 1 zu erkennen ist, ist dort insbesondere das Spannelement 4 in der so genannten entspannten Situation dargestellt, wobei das Verspannelement 4 in der Figur 2 in der verspannten Situation gezeigt wird, jedoch hier ohne das entsprechend zugehörige aufgeschobene Schienenprofil 2. Aus der Figur 2 wird deutlich, dass das Spannelement 4 ein Federelement umfasst, dessen Spannkraft entgegen der Aufschieberichtung, gemäß Pfeilrichtung, des Schienenprofils 2 wirkt. Erkennbar ist auch, dass hierbei das Federelement aus einer Federstahlzunge 5 gebildet ist. Wie aus der Figur 1 zu erkennen ist, ist die Federstahlzunge 5 in einer an dem Verbindungselement 1 vorgesehenen Durchbruchöffnung 6 angeordnet. Dabei ist die Federstahlzunge 5 an der Durchbruchsöffnung 6, und hier an der vorderen Querwand der Durchbruchsöffnung 6, schwenkbar gelagert. Die Federstahlzunge 5 ist in ihrer Erstreckung kleiner bemessen, als die Erstreckung der Durchbruchsöffnung 6, was insbesondere aus der Figur 1 ersichtlich ist, wo ein Teilbereich der Federstahlzunge 5 durch die Durchbruchsöffnung 6 nach unten hindurch ragt. Weiter ist in der Zusammenschau der Figuren 1 und 2 zu erkennen, dass die Federstahlzunge 5 mit einem an der Durchbruchsöffnung 6 angeordneten Schieber 7 zusammenwirkt, mittels der die Federstahlzunge 5 verspannbar bzw. entspannbar gegenüber dem aufgeschobenen Schienenprofil 2 ist. Diese Situation ist ebenfalls aus der Zusammenschau der Figuren 1 und 2 ersichtlich, wobei in der Figur 1 der Schieber 7 nach vorne zu der Gelenkstelle 8 der Federstahlzunge 5 verschoben ist, so dass die Federstahlzunge 5 in die Durchbruchsöffnung 6 eintauchen kann. Die Figur 2 zeigt hier die Stellung des Schiebers 7 am anderen Ende der Durchbruchsöffnung 6, wobei der Schieber 7 dann die schwenkbar gelagerte Federstahlzunge 5 aus der Durchbruchsöffnung 6 heraus verschwenkt, um so die Verspannung bzw. Verriegelung herbei zu führen. Dabei ist von besonderem Vorteil, dass die Federstahlzunge 5, wie zu erkennen ist, eine gewölbte oder dachförmige Formgebung aufweist. Befindet sich der Schieber 7 in der vorderen Stellung, so taucht der vordere Teil der Federstahlzunge 5 komplett ein, und behindert somit nicht den Aufschiebevorgang des Schienenprofils 2.

Nach einer besonders vorteilhaften Ausgestaltung der Erfindung sind am freien Ende der Federstahlzunge 5 unter einem Winkel stehende Zacken 9 und 10 angeordnet, die im verspannten Zustand der Federstahlzunge 5 sich an der Innenwand 11 des aufgeschobenen Schienenprofils 2 verkrallen. Dies hat insbesondere den Vorteil, dass dadurch die elektrische Leitfähigkeit zwischen den einzelnen Komponenten hergestellt wird, wobei die Leitfähigkeit dann von dem aufgeschobenen Schienenprofil 2 auf die Federstahlzunge 5 und dann auf das Verbindungselement 1 überbrückt wird, und dann diese über das Verbindungselement 1 auf das gegenüber liegende, nicht näher dargestellte auf Stoß aufgeschobene Schienenprofil 2 hergestellt wird.

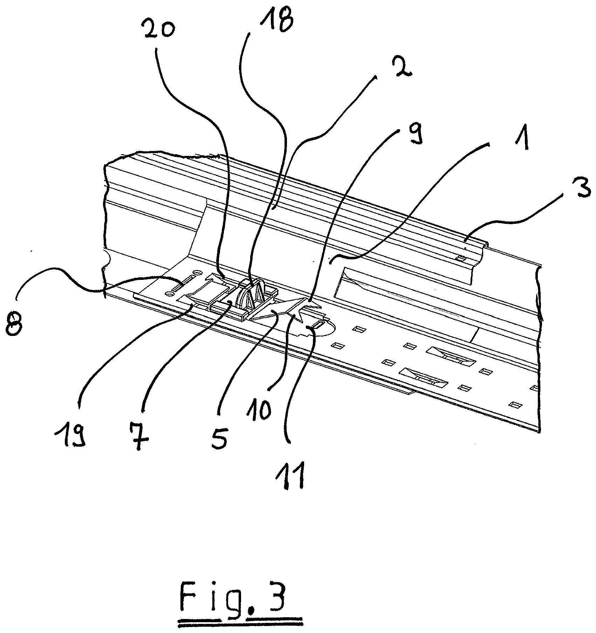

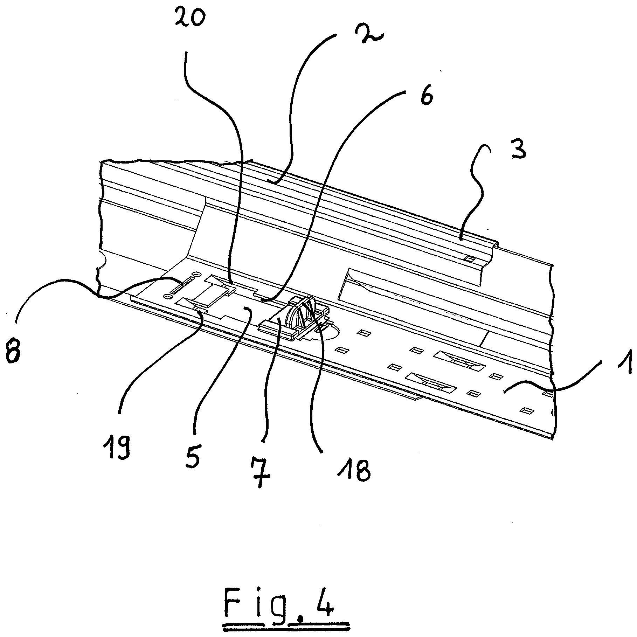

Die Figuren 3 und 4 zeigen insbesondere beide Situation nochmals aus einer anderen Ansicht, wobei hier das Verbindungselement 1 in der Unteransicht gezeigt wird, wobei der vordere Schenkelbereich von Schienenprofil 2 und Verbindungselement 1 nicht dargestellt ist, und wobei sich das Schienenprofil 2 im aufgeschobenen Zustand befindet. Die Figur 3 zeigt hier die entspannte Situation, wobei der Schieber 7 sich in der vorderen Stellung befindet. Die Figur 4 zeigt die verspannte Situation ebenfalls in der Unteransicht, wobei hier der Schieber 7 nach hinten geschoben ist, so dass die Zacken 9 und 10 sich an der Innenwand des Schienenprofis 2 verkrallen.

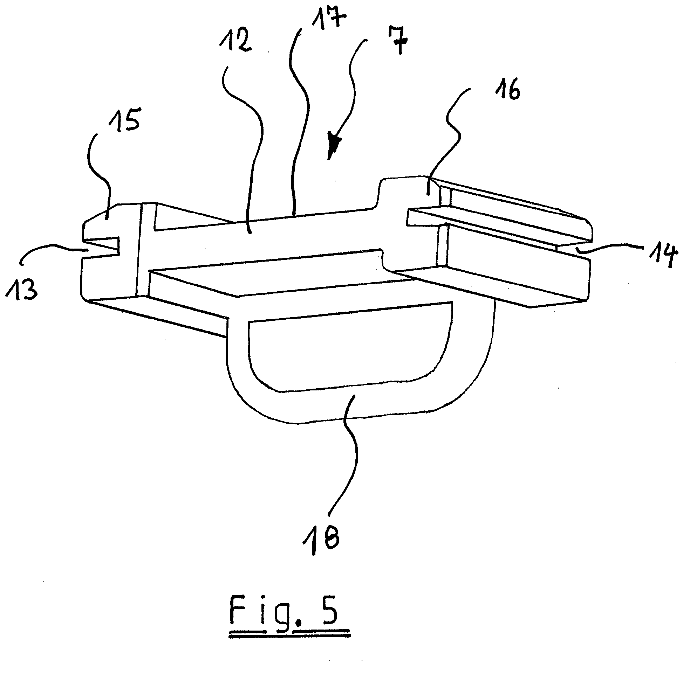

Der Schieber 7 als solches, isoliert dargestellt in der Figur 5, besteht hierbei aus einem plattenförmigen Element 12, an dessen Seitenkanten Nuten 13 und 14 angeformt sind, die in die Längsseiten 15 und 16 der Durchbruchsöffnungen 6 greifen. Der Schieber 7 wird somit an den Längsseitenkanten der Durchbruchsöffnung 6 geführt. Nach einer besonders vorteilhaften Ausgestaltung des Schiebers 7 sind hierbei die Nuten 13 und 14 mit ihren oberen Schenkeln 15 und 16 über dem Niveau des plattenförmigen Elementes 12 angeordnet. Aufgrund dieser Ausbildung ergibt sich zwischen den Schenkeln 15 und 16 eine Führungsbahn 17 für die Federstahlzunge 5, die hierbei von unten her beim Verschieben geführt wird, so dass eine sichere Verkrallung der Zacken 9 und 10 an der Innenwand 11 des Schienenprofils 2 bereit gestellt wird. Dabei befindet sich unterhalb des plattenförmigen Elementes 12 ein Griffelement 18 zur Betätigung des Schiebers 7. Somit wird deutlich, dass aufgrund der Anordnung des Schiebers 7 mit dem Griffelement 18 leicht und einfach in das Verbindungselement 1 von unten hinein gegriffen werden kann, wobei durch einfaches Verrücken bzw. Verschieben des Schiebers 7 mit der Hand innerhalb der Durchbruchsöffnung 6 entweder der entspannte Zustand zur Demontage des Schienensystems oder zur Montage durch entsprechendes Verspannen herbei geführt werden kann. Um den Schieber 7 hier einfach und leicht in seine Funktion zu bringen, sind in den Längsseiten der Durchbruchsöffnung 6 ausgestanzte Bereiche 19 und 20 vorgesehen, in denen der Schieber 7 einfach und leicht zwischen die Längsseiten der Durchbruchsöffnung 6 eingesetzt werden kann.

Das Spannelement 4, so wie es hier beschrieben wird, kann natürlich auch ein Drehelement umfassen, welches ebenfalls hier die Verspannwirkung herbei führt. Dabei kann das Drehelement beispielsweise auch eine exzentrische Lagerung aufweisen, mit der man dann die Verspannung der Federstahlzunge 5 herbei führen kann. Denkbar ist auch ein exzentrisch gelagertes Klappelement, mit dem ebenfalls die verspannte oder die entspannte Situation handbetätigt vollzogen werden kann.

### Bezugszeichenliste

- 01: Verbindungselement
- 02: Schienenprofil
- 03: Endbereich
- 04: Spannelemente
- 05: Federstahlzunge
- 06: Durchbruchsöffnung
- 07: Schieber
- 08: Gelenkstelle
- 09: Zacken
- 10: Zacken
- 11: Innenwand
- 12: plattenförmiges Element
- 13: Nut
- 14: Nut
- 15: Schenkel
- 16: Schenkel
- 17: Führungsbahn
- 18: Griffelement
- 19: Bereich
- 20: Bereich

## Patentansprüche

1. Verbindungselement (1) für ein Lichtbandschienensystem bzw. ein Tragschienensystem für Leuchten, umfassend vorzugsweise U-förmige Schienenprofile (2), die auf Stoß mittels des ebenfalls U-förmig ausgebildeten Verbindungselementes (1) verbindbar sind, wobei jeweils der Endbereich (3) der zu verbindenden Schienenprofile (2) auf das unter einem Toleranzmaß gefertigte Verbindungselement (1) schiebbar bzw. steckbar ausgebildet ist, und wobei die Endbereiche (3) an dem Verbindungselement (1) festlegbar sind, wobei an dem Verbindungselement (1) handbetätigbare Spannelemente (4) angeordnet sind, die eine werkzeuglose Verspannung zwischen dem jeweiligen Endbereich (3) des Schienenprofils (2) und dem Verbindungselement (1) bewirken, wobei im verspannten Zustand die Schienenprofile (2) eine elektrisch leitende Verbindung bilden, wobei das Spannelement (4)ein aus einer Federstahlzunge (5) ausgebildetes Federelement umfasst, die in einer an dem Verbindungselement (1) vorgesehenen Durchbruchsöffnung (6) angeordnet und schwenkbar gelagert ist, wobei die Federstahlzunge (5) mit einem an der Durchbruchsöffnung (6) angeordnetem Schieber (7) zusammenwirkt, mittels der die Federstahlzunge (5) verspannbar bzw. entspannbar gegenüber dem aufgeschobenen Schienenprofil (2) ist, **dadurch gekennzeichnet dass** der Schieber (7) aus einem plattenförmigen Element (12) besteht, an dessen Seitenkanten Nuten (13) und (14) angeformt sind, die in die Längsseiten der Durchbruchöffnung (6) greifen.

2. Verbindungselement nach Anspruch 1,
**dadurch gekennzeichnet,**
**dass** die Federstahlzunge (5) eine gewölbte oder dachförmige Formung aufweist.

3. Verbindungselement nach Anspruch 1 und 2,
**dadurch gekennzeichnet,**
**dass** am freien Ende der Federstahlzunge (5) unter einem Winkel stehende Zacken (9) und (10) angeordnet sind, die im verspannten Zustand der Federstahlzunge (5) sich an der Innenwand (11) des aufgeschobenen Schienenprofils (2) verkrallen.

4. Verbindungselement nach Anspruch 1 bis 3,
**dadurch gekennzeichnet,**
**dass** die Nuten (13) und (14) an der Oberseite mit ihren oberen Schenkeln (15) und (16) über dem Niveau des plattenförmigen Elements (12) angeordnet sind zur Bildung einer Führungsbahn (17) unterhalb der Federstahlzunge (5).

5. Verbindungselement nach Anspruch 1 bis 4,
**dadurch gekennzeichnet,**
**dass** unterhalb des plattenförmigen Elementes (12) ein Griffelement (18) zur Betätigung des Schiebers (7) angeformt ist.

6. Verbindungselement nach Anspruch 1 bis 5,
**dadurch gekennzeichnet,**
**dass** in den Längsseiten der Durchbruchöffnungen (6) ausgestanzte Bereiche (19) und (20) zum Einsetzen des Schiebers (7) vorgesehen sind.

7. Verbindungselement nach einem oder mehreren der vorhergehenden Ansprüche 1 bis 6,
**dadurch gekennzeichnet,**
**dass** das Spannelement (4) ein Drehelement umfasst, dessen Spannkraft entgegen der Aufschieberichtung des Schienenprofils (2) wirkt.

8. Verbindungselement nach einem oder mehreren der vorhergehenden Ansprüche 1 bis 7 **dadurch gekennzeichnet,**
**dass** das Spannelement (4) ein Klappelement umfasst, dessen Spannkraft entgegen der Aufschieberichtung des Schienenprofils (2) wirkt.

## Claims

1. A connecting element (1) for a light-band rail system / support rail system for luminaries, comprising preferably U-shaped rail profiles (2), which can be connected flush by means of equally U-shaped connecting elements (1), wherein the end regions (3) of the rail profiles (2) to be connected can be pushed / plugged onto the connecting element (1) manufactured at a certain tolerance, and wherein the end regions (3) can be affixed to the connecting element (1), wherein the connecting element (1) has manually operated tensioning elements (4) arranged on it, which cause the respective end region (3) of the rail profile (2) and the connecting element (1) to be tensioned against each other in a tool-free manner, wherein when in a tensioned state the rail profiles (2) form an electrically conducting connection,
wherein the tensioning element (4) includes a spring element designed as a spring steel tongue (5) which is arranged in a breakthrough opening (6) on the connecting element (1) and pivotably mounted, wherein the spring steel tongue (5) cooperates with a pusher (7) arranged on the breakthrough opening (6) by means of which the spring steel tongue (5) can be tensioned / relaxed in relation to the pushed-on rail profile (2), **characterised in that** the pusher (7) consists of a plate-shaped element (12) which has grooves (13) and (14) formed on its lateral edges, which grooves engage in the longitudinal sides of the breakthrough opening (6).

2. The connecting element according to claim 1,
**characterised in that** the spring steel tongue (5) is shape in an arched or roof-like manner.

3. The connecting element according to claim 1 or 2,
**characterised in that** teeth (9) and (10) are arranged under an angle at the free end of the spring steel tongue (5), which teeth, in the tensioned state of the spring steel tongue (5), cling like claws to the inner wall (11) of the pushed-on rail profile (2).

4. The connecting element according to claims 1 to 3,
**characterised in that** the grooves (13) and (14) on the top are arranged with their upper shanks (15) and (16) above the level of the plate-shaped element (12) in order to form a guide path (17) below the spring steel tongue (5).

5. The connecting element according to claims 1 to 4,
**characterised in that** a grip element (18) is moulded on underneath the plate-shaped element (12) for operating the pusher (7).

6. The connecting element according to claims 1 to 5,
**characterised in that** punched-out regions (19) and (20) are provided on the longitudinal sides of the breakthrough opening (6) for inserting the pusher (7).

7. The connecting element according to one or more of the preceding claims 1 to 6,
**characterised in that** the tensioning element (4) acts against the push-on direction of the rail profile (2).

8. The connecting element according to one or more of the preceding claims 1 to 7,
**characterised in that** the tensioning element (4) includes a folding element the tensioning force of which acts against the push-on direction of the rail profile (2).

## Revendications

1. Élément de liaison (1) pour un système de bandeaux lumineux ou un système de rails porteurs pour des luminaires, comprenant de préférence des profilés de rail (2) en forme de U, qui peuvent être assemblés en aboutement au moyen de l'élément de liaison (1) également conçu en forme de U, chaque fois la zone d'extrémité (3) des profilés de rails (2) à assembler étant conçue de manière à pouvoir être emboîtée ou enfichée sur l'élément de liaison (1) fabriqué sous des critères de tolérance et les zones d'extrémité (3) étant susceptibles d'être immobilisées sur l'élément de liaison (1), sur l'élément de liaison (1) étant placés des éléments de serrage (4) manuellement activables qui provoquent une contrainte sans outil entre la zone d'extrémité (3) concernée du profilé de rail (2) et l'élément de liaison (1), dans l'état contraint, les profilés de rails (2) formant une liaison conductrice d'électricité,
l'élément de serrage (4) comprenant un élément à ressort conçu en une languette (5) en acier à ressort, qui est logée en étant susceptible de pivoter dans un orifice de passage (6) prévu sur l'élément de liaison (1), la languette (5) en acier à ressort coopérant avec un coulisseau (7) placé sur l'orifice de passage (6) au moyen duquel la languette (5) en acier à ressort peut être contrainte ou délestée par rapport au profilé de rail (2) emboîté, **caractérisé en ce que** le coulisseau (7) est constitué d'un élément (12) en forme de plaque sur les arêtes latérales duquel sont moulées des rainures (13) et (14) qui s'engagent dans des côtés longitudinaux de l'orifice de passage (6).

2. Élément de liaison selon la revendication 1,
**caractérisé en ce que** la languette (5) en acier à ressort présente une conformation curviligne ou en forme de toit.

3. Élément de liaison selon la revendication 1 et 2
**caractérisé en ce que** sur l'extrémité libre de la languette (5) en acier à ressort sont placées des crêtes (9) et (10) érigées sous un angle, qui dans l'état contraint de la languette (5) en acier à ressort s'accrochent sur la paroi intérieure (11) du profilé de rail (2) emboîté.

4. Élément de liaison selon la revendication 1 à 3,
**caractérisé en ce que**, sur la face supérieure, par leurs branches supérieures (15) et (16), les rainures (13) et (14) sont placées au-dessus du niveau de l'élément (12) en forme de plaque, pour former une trajectoire de guidage (17) en-dessous de la languette (5) en acier à ressort.

5. Élément de liaison selon la revendication 1 à 4,
**caractérisé en ce qu'**en dessous de l'élément (12) en forme de plaque est moulé un élément de préhension (18) pour l'actionnement du coulisseau (7).

6. Élément de liaison selon la revendication 1 à 5,
**caractérisé en ce que** dans des côtés longitudinaux des orifices de passage (6) sont prévues des zones découpées (19) et (20) pour l'insertion du coulisseau (7).

7. Élément de liaison selon l'une quelconque ou plusieurs des revendications 1 à 6 précédentes,
**caractérisé en ce que** l'élément de serrage (4) comprend un élément rotatif, dont la force de serrage agit à l'encontre de la direction d'emboîtement du profilé de rail (2).

8. Élément de liaison selon l'une quelconque ou plusieurs des revendications 1 à 7 précédentes,
**caractérisé en ce que** l'élément de serrage (4) comprend un élément rabattable, dont la force de serrage agit à l'encontre de la direction d'emboîtement du profilé de rail (2).
